# FASCICULE DE BREVET EUROPEEN

(11) **EP 0 907 781 B1**
(45) Date de publication et mention de la délivrance du brevet: **09.01.2002**
(21) Numéro de dépôt: 98913863.1
(22) Date de dépôt: 09.03.1998
(51) Int. Cl.: D04H 13/00, B32B 5/12

(54) **MATERIAU TEXTILE MULTICOUCHES UTILISABLE COMME ARMATURE DE RENFORCEMENT DE REVETEMENTS D'ETANCHEITE**
MEHRSCHICHTIGES TEXTILMATERIAL VERWENDBAR ALS VERSTÄRKUNGSSTRUKTUR FÜR ABDICHTBELÄGE
MULTILAYER TEXTILE MATERIAL USEFUL FOR ARMOURING REINFORCEMENT OF MEMBRANE ROOFING SYSTEM

(30) Priorité: 25.03.1997 FR 9703913
(43) Date de publication de la demande: 14.04.1999
(73) Titulaire: ETABLISSEMENTS LES FILS D'AUGUSTE CHOMARAT & CIE, 75002 Paris (FR)
(72) Inventeur: CHABAL, Claude, F-07310 Saint Martin de Valamas (FR); TEYSSIER, Robert, F-07160 Le Cheylard (FR)
(74) Mandataire: Vuillermoz, Bruno
(86) Numéro de dépôt international: FR9800463
(87) Numéro de publication internationale: WO9842905

(56) Documents cités:
- EP-A- 0 315 553
- EP-A- 0 737 461
- US-A- 4 743 495
- US-A- 5 100 724

## Description

La présente invention concerne un nouveau type de matériau constitué par un complexe textile multicouches réalisé à partir de nappes fibreuses non tissées, et qui est utilisable comme armature de renforcement de revêtements d'étanchéité constituée d'un support textile noyé dans une composition de bitume.

Dans la suite de la description, l'invention sera décrite pour une telle application, mais il est évident que ceci n'est pas limitatif et qu'éventuellement un tel matériau pourrait être utilisé pour d'autres applications, par exemple comme support d'enduction ou armature de renforcement d'articles stratifiés à base de résine.

Les chapes d'étanchéité constituées d'une armature textile imprégnée de bitume sont des articles bien connus et sont utilisés dans de nombreux domaines, notamment dans l'industrie du bâtiment.

Pour réaliser de telles chapes, on a proposé depuis fort longtemps d'utiliser comme armature des tissus à contexture lâche, notamment à base de fils de verre (silionne).

Il a également été envisagé d'utiliser des feutres à base de fils de verre, de réaliser des complexes non tissés/tissus et/ou d'associer des nappes à base de matières textiles différentes, par exemple un non tissé polyester et un voile de fibres de verre.

La réalisation de tels complexes permet d'améliorer notablement les caractéristiques mécaniques que confère l'armature au matériau terminé, notamment à ce qui a trait à la stabilité dimensionnelle et à la résistance au poinçonnement tant statique que dynamique.

Par ailleurs, pour une telle application, il est de préférence exigé que le renfort textile présente des caractéristiques non feu, c'est-à-dire qu'il doit présenter une très grande résistance à la chaleur et aux flammes, et qu'il n'y ait pas propagation de ces dernières s'il y est exposé.

Enfin, dans le cadre d'un renfort multicouches, il est impératif d'avoir une très bonne résistance au délaminage.

Parmi les solutions proposées à ce jour, pour résoudre l'ensemble de ces problèmes, on peut citer celles faisant l'objet des brevets FR 2 562 472 (correspondant au brevet US 4 576 858) et EP-A-315 553 (correspondant au brevet US 5 047 276) au nom du Demandeur, qui permettent d'obtenir des complexes textiles multicouches dont l'une des faces (EP 315 553) ou les deux faces (FR 2 562 472) peuvent être constituées de fibres ininflammables, telles que notamment des fibres de verre.

L'un des inconvénients que présentent de tels complexes dans lesquels les caractéristiques non feu sont obtenues à partir de fibres de verre, résident dans le fait que la structure finale est d'un poids relativement élevé. Par ailleurs, ces matériaux ont une structure rigide et cassante, présentent une cohésion jugée parfois insuffisante et entraîne la formation de poussières.

Or on a trouvé, et c'est ce qui fait l'objet de la présente invention, un nouveau type de matériau complexe particulièrement adapté pour être utilisé comme armature de renforcement de revêtements d'étanchéité qui permet de résoudre ces problèmes.

D'une manière générale, le matériau conforme à l'invention est constitué par un complexe comportant une grille textile noyée à l'intérieur d'une structure fibreuse constituée de nappes non tissées disposées de part et d'autre de ladite grille, lesdites nappes étant liées entre elles par enchevêtrement des fibres des nappes entre elles, enchevêtrement obtenu par l'action de jets de fluide (air ou eau), qui entraînent les fibres au travers de la grille et les répartissent de part et d'autre de cette dernière sans la détériorer, les deux nappes étant constituées de fibres synthétiques.

Le matériau selon l'invention se caractérise en ce que :
- la grille textile est une grille à base de fils de verre ou de fils polyester ;
- les nappes fibreuses disposées de part et d'autre de cette grille sont à base de fibres de polyester, au moins l'une de ces nappes comportant 20 à 40 % de fibres sélectionnées dans la famille des fibres à haute résistance au feu et à la chaleur telles que fibres aramides.

De préférence, le pourcentage de fibres résistantes au feu et à la chaleur est de l'ordre de 30 % par rapport au poids de la nappe dans laquelle elles sont introduites.

S'il est évident que l'utilisation de fibres résistantes au feu, c'est-à-dire de fibres qui ne fondent ni ne s'enflamment pas et qui, sous l'effet d'une flamme se pyrolysent avec carbonisation, pouvait permettre d'obtenir les caractéristiques non feu exigées pour les revêtements d'étanchéité bitumineux, en revanche, rien ne pouvait laisser supposer que l'adjonction d'une faible quantité de telles fibres à l'intérieur d'une structure ne présentant pas une telle caractéristique (nappes fibreuses en polyester), permettrait d'obtenir un tel résultat.

La fourchette donnée précédemment de 20 à 40 % du poids de l'une des nappes fibreuses entrant dans la constitution du complexe, correspond à un pourcentage global de 10 à 20 % du poids total des matières fibreuses du complexe, et permet d'obtenir des caractéristiques souhaitées de résistance au feu.

En effet, il a été constaté qu'avec un pourcentage inférieur à 20 %, la résistance au feu n'était pas parfaite et qu'un pourcentage supérieur à 40 %, ne conduisait à aucune amélioration sensible.

Par ailleurs, si la grille de renforcement peut être réalisée à partir de fils polyester, de préférence on utilisera cependant une grille en fils de verre, c'est-à-dire dans un matériau ininflammable qui permet, dans l'hypothèse où la structure fibreuse se trouve dégradée sous l'action d'une flamme, d'éviter une dégradation et une rupture totale de la structure.

L'invention et les avantages qu'elle apporte sera cependant mieux comprise grâce à l'exemple de réalisation donné ci-après à titre indicatif et non limitatif.

### Exemple

On réalise un matériau conforme à l'invention à partir des composants suivants :
- pour la grille textile :
   . grille à base de fils de verre (silionne) comportant 4 fils en chaîne et 2 en trames, par centimètre, chaque fil ayant un titre de 68 tex en chaîne et de 136 tex en trame,
   . cette grille est une grille non tissée obtenue de manière conventionnelle, les fils de chaîne et de trame étant liés entre eux par une colle du type PVC ignifugé à raison de 77 g/m2,
   . poids total au m2 (fils + colle) : 145 grammes ;
- pour la structure fibreuse :
   . une nappe non tissée à base de fibres de polyester obtenues par cardage - coupe 50 mm - titre 3 et 6 deniers, pesant 40 g/m2,
   . une seconde nappe également de 40 g/m2 obtenue par cardage constituée d'un mélange de fibres de polyester - coupe 50 mm - titre 3 et 6 deniers, et de fibres aramides - coupe 50 mm - titre 2 deniers ; cette nappe comporte 70 % de fibres polyester et 30 % de fibres aramides.

L'association des constituants est réalisée d'une manière similaire aux enseignements de l'EP-A-315 553, c'est-à-dire en interposant la grille à base de fils de verre entre les deux nappes fibreuses et en amenant les nappes ainsi superposées à l'intérieur d'une installation d'entrelaçage par jets de fluide, les jets agissant au moins sur la face de la nappe fibreuse comportant les fibres ininflammables.

De préférence, on soumet cependant le complexe à un double entrelaçage par jets de fluide agissant successivement contre les deux faces externes fibreuses, puis on fait passer l'ensemble dans un bain de colle permettant une imprégnation de 20 g/m2, et qui apporte à la structure la rigidité souhaitée.

En sortie de l'installation, on obtient un complexe dans lequel les différents constituants sont parfaitement liés entre eux, dont l'épaisseur est d'environ 0,6 mm et qui pèse 245 g/m2.

Un tel matériau est particulièrement adapté pour être utilisé comme renfort d'une chape de bitume et présente une très grande résistance au feu. En effet, si l'on soumet le produit à l'action d'une flamme, on constate qu'il y a une détérioration, sans production de flamme de la structure fibreuse, détérioration qui se produit uniquement dans la zone où agit la flamme et ne se propage pas latéralement.

Bien entendu, l'invention n'est pas limitée à l'exemple donné, mais elle en couvre toutes les variantes réalisées dans le même esprit.

## Revendications

1. Matériau textile multicouches utilisable notamment comme armature de renforcement de revêtements d'étanchéité, constitué par un complexe comportant une grille textile noyée à l'intérieur d'une structure fibreuse constituée de nappes non tissées disposées de part et d'autre de ladite grille, lesdites nappes étant liées entre elles par enchevêtrement des fibres des nappes entre elles, enchevêtrement obtenu par l'action de jets de fluide (air ou eau), qui entraînent les fibres au travers de la grille et les répartissent de part et d'autre de cette dernière sans la détériorer, les deux nappes étant constituées de fibres synthétiques, **caractérisé en ce que** :
- la grille textile est une grille à base de fils de verre ou de fils polyester ;
- les nappes fibreuses disposées de part et d'autre de cette grille sont à base de fibres de polyester, au moins l'une de ces nappes comportant 20 à 40% de fibres sélectionnées dans la famille des fibres à haute résistance au feu et à la chaleur.

2. Matériau selon la revendication 1, **caractérisé en ce que** les fibres résistantes au feu et à la chaleur sont des fibres aramides.

## Patentansprüche

1. Mehrschichtiges Textilmaterial verwendbar insbesondere als Verstärkungsarmierung für Dichtungsbeläge, das aus einem Verbundstoff mit einem Textilgitter gebildet ist, das innerhalb einer Faserstruktur eingebettet ist, die aus nicht gewebten, beiderseits dieses Gitters angeordneten Vliesen besteht, wobei diese Vliese miteinander dadurch verbunden sind, daß die Fasern der Vliese miteinander verschlungen sind, wobei das Verschlingen der Fasern durch die Einwirkung von Strahlen gasförmiger oder flüssiger Medien (Luft oder Wasser) erzielt wird, die die Fasern durch das Gitter hindurchziehen und sie beiderseits desselben verteilen, ohne das Gitter hierbei zu beschädigen, und wobei die beiden Vliese aus synthetischen Fasern bestehen,
**dadurch gekennzeichnet, daß**
- das Textilgitter ein Gitter aus Glasfasern oder Polyesterfasern ist;
- die beiderseits dieses Gitters angeordneten Faservliese aus Polyesterfasern bestehen, wobei wenigstens eines der Vliese einen Anteil von 20 bis 40% an Fasern umfaßt, die zur Familie der Fasern gehören, die eine hohe Feuer- und Hitzebeständigkeit aufweisen.

2. Material nach Anspruch 1,
**dadurch gekennzeichnet, daß** die feuer- und hitzebeständigen Fasern Aramidfasern sind.

## Claims

1. Multi-layer textile material usable in particular as a reinforcing basis for waterproofing coverings, consisting of a complex comprising a textile grid embedded within a fibrous structure consisting of non-woven laps disposed on either side of the said grid, the said laps being mutually bound by the entanglement of the fibres of the laps with each other, this entanglement being obtained by the action of jets of fluid (air or water) which drive the fibres through the grid and distribute them on either side thereof without damaging it, the two laps consisting of synthetic fibres, **characterized in that**:
- the textile grid is a grid based on glass threads or on polyester threads;
- the fibrous laps disposed on either side of this grid are based on polyester fibres, at least one of these laps comprising 20 to 40% of fibres selected from the family of fibres having a high resistance to fire and to heat.

2. Material according to Claim 1, **characterized in that** the fibres resistant to fire and to heat are aramid fibres.
